Europäisches Patentamt

(19) European Patent Office

Office européen des brevets

(11) Publication number: **0 083 100**
**B1**

(12) **EUROPEAN PATENT SPECIFICATION**

(45) Date of publication of patent specification: **06.04.88**

(21) Application number: **82112037.5**

(22) Date of filing: **27.12.82**

(51) Int. Cl.⁴: **G 01 J 5/00, G 01 J 5/04**

(54) **Method of measuring pipe temperature.**

(30) Priority: **28.12.81 JP 213038/81**
**30.03.82 JP 51500/82**
**30.03.82 JP 51501/82**
**30.03.82 JP 51502/82**
**30.03.82 JP 51503/82**
**01.04.82 JP 54456/82**
**01.04.82 JP 54457/82**

(43) Date of publication of application:
**06.07.83 Bulletin 83/27**

(45) Publication of the grant of the patent:
**06.04.88 Bulletin 88/14**

(84) Designated Contracting States:
**DE FR IT**

(56) References cited:
**FR-A-2 174 653**
**US-A-3 266 313**

㎅ Proprietor: **NIPPON STEEL CORPORATION**
**6-3 Otemachi 2-chome Chiyoda-ku**
**Tokyo 100 (JP)**

(72) Inventor: **Iuchi, Tohru c/o Nippon Steel**
**Corporation**
**Fundamental Research Lab. 1618, Ida Nakahara-ku**
**Kawasaki City Kanagawa Prefecture (JP)**
Inventor: **Tanaka, Fumio c/o Nippon Steel**
**Corporation**
**Fundamental Research Lab. 1618, Ida Nakahara-ku**
**Kawasaki City Kanagawa Prefecture (JP)**
Inventor: **Sato, Toshiaki c/o Nippon Steel**
**Corporation**
**Yawata Works 1-1-1, Edamitsu Yawata-higashi-ku**
**Kitakyushu City Fukuoka Prefecture (JP)**
Inventor: **Watanabe, Kunitoshi c/o Nippon Steel**
**Corporation**
**Yawata Works 1-1-1, Edamitsu Yawata-higashi-ku**
**Kitakyushu City Fukuoka Prefecture (JP)**

(74) Representative: **Vossius & Partner**
**Siebertstrasse 4 P.O. Box 86 07 67**
**D-8000 München 86 (DE)**

**Description**

This invention relates to a noncontact method of measuring the temperature of a pipe placed in a heat treatment furnace.

In giving such heat treatments as annealing and tempering to fabricated pipes, such as seamless steel pipes, it is necessary to measure the temperature of such pipes and control the quantity of combustion gases and the residence time of each pipe in the heat treatment furnace so that the preset temperature be maintained in the furnace. The temperature of the pipe in the heat treatment furnace can be measured by bringing a thermocouple or other sensing devices into direct contact with the pipe or by employing a noncontact method using a radiometer or a radiation thermometer, or otherwise. The method that uses thermocouples and other contact-type sensors requires an appropriate means to bring and keep such instruments in contact with the pipe. The high temperature in the furnace gives rise to the problems of their protection and deterioration. Furthermore, it becomes practically difficult to achieve the temperature measurement if the pipe moves in the furnace.

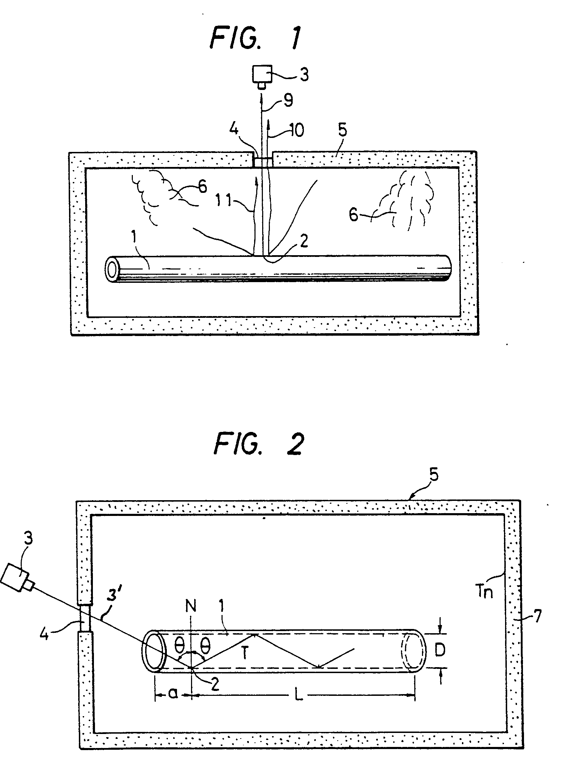

Noncontact pipe temperature measurement can be achieved by introducing the radiation energy from the pipe through a transparent window made in the furnace wall to a radiometer or radiation thermometer. Yet, it is practically difficult to achieve accurate temperature measurement with conventional methods because of the problems discussed in the following. Fig. 1 schematically illustrates a popular steel pipe temperature measuring method of the conventional type.

The temperature of a steel pipe 1 placed in a heat treatment furnace 5 is measured by a radiometer 3 that senses the radiation energy from the measuring point 2 on the pipe through a transparent window 4 provided in the furnace wall. However, this method encounters several problems defying accurate temperature measurement. For example, the emissivity of a pipe varies. In a heat treatment furnace in general commercial use, the temperature of the furnace inwall is higher than the pipe temperature. When the radiation energy from such a furnace inwall is reflected at the measuring point 2, the magnitude of a noise component 10 sensed by the radiometer 3 can become unnegligibly larger than the radiation component 9 from the pipe itself. Also, combustion of coke gas in the furnace, a practice often implemented for heating the pipe, sets up flames 6 whose radiation energy also constitutes a very large noise component 11, precluding accurate temperature measurement.

That is, the radiation energy signal E sensed by the radiometer 3 used in the conventional method is expressed as follows:

$$E = \varepsilon \cdot E_b(T) + E' \qquad\qquad (1)$$

where
E=sensing signal of radiometer
T=pipe temperature
$E_b(T)$=blackbody radiation energy at temperature T
$\varepsilon$=emissivity at pipe surface
E'=noise signal component from furnace inwall, flames, etc.

This equation shows that it is very difficult to achieve accurate temperature measurement in ordinary commercial heat treatment furnaces in which $\varepsilon$ and E' are considered to be unknown or vary.

FR—A—2 174 653 describes a method for measuring the temperature of the inner wall surface of a heat treatment furnace using an optical pyrometer. A pipe being made of a material with high thermal conductivity is inserted into the wall furnace, and the pyrometer arranged outside the pipe is directed to a measuring point at the bottom of the pipe.

US—A—3 266 313 describes a method of measuring the temperature of a cylindrical object using an ellipsoidal mirror. The object is placed at one of the two focuses of the mirror and a radiometer at the other focus. The surface of the mirror is made highly reflective, so that the radiation emitted from the object in all directions is gathered at the radiometer.

The object of this invention is to provide a radiometric method of accurately measuring the temperature of pipes placed in a heat treatment furnace without being affected by the variation in emissivity and the presence of noises.

This object is achieved by the method according to claim 1.

According to the method of this invention, the measuring end of a radiometer placed outside the pipe is directed to the inside of the pipe in order that the radiation energy from the internal surface of the pipe is sensed, and the pipe temperature is measured without being disturbed by the noise components from the furnace inwall, flames, and so on. The radiometer is set in such a manner that the direction that is axisymmetrical, with respect to the normal line drawn at the measuring point, to the direction in which the radiometer is directed intersects a point on the internal surface of the pipe, thereby making the emissivity $\varepsilon_a$ substantially equal to 1. Thus, the temperature measuring error is reduced.

Measuring the temperature inside the pipe also has a metallurgical effect. In the case of a seamless pipe, the center of a bloom where segregation is liable to occur comes on the inside of the pipe, which, as a consequence, must necessarily be heated to a given heat treatment temperature. For heat treatment, the

2

pipe is heated from the outside, so the inside of the pipe sometimes fails to reach the desired temperature. But measuring the pipe inside temperature according to the method of this invention assures the heating to the predetermined heat treatment temperature.

Embodiments of the invention are further described in detail in connection with the drawings.

Fig. 1 is a schematic illustration of a conventional pipe temperature measuring method.

Fig. 2 illustrates the principle of a pipe temperature measuring method according to this invention.

Figs. 3 and 4 are diagrams showing the relationship between the emissivity and dimensions (length and diameter) of a pipe whose temperature is measured by the method of this invention.

Fig. 5 schematically shows a device used in a preferred embodiment in which the method of this invention is applied to the temperature measurement of a pipe being heat treated.

Fig. 6 is a schematic illustration of another embodiment of this invention.

Fig. 7 illustrates the principle of the method shown in Fig. 6.

Fig. 8 is a schematic illustration of still another embodiment of this invention.

Fig. 9 shows three different radiation emitters used in the method of Fig. 8. Fig. 9(a) shows a plate-like emitter, Fig. 9(b) a closed-end cylinder-like emitter, and Fig. 9(c) a version combining two closed-end cylinders.

Fig. 10 shows how the radiation emitter is used. Fig. 10(a) shows how the radiation emitter is heated, Fig. 10(b) shows how the temperature of the radiation emitter is measured, and Fig. 10(c) shows how the radiation emitter is placed outside the furnace.

Fig. 11 shows yet another embodiment of this invention which employs a rotary sector and a blackbody furnace.

Fig. 12 shows the construction of an arithmetic unit, along with the flow of signals therein, used in the method shown in Fig. 11.

Fig. 13 shows an embodiment in which the blackbody furnace in Fig. 11 is replaced with a concave reflector.

Fig. 14 schematically illustrates a device used for the comparison of the pipe temperature measuring accuracy between the method of this invention and the conventional method.

Fig. 2 schematically shows a pipe temperature measuring method according to this invention. A steel pipe 1 is placed in a heat treatment furnace 5 whose effective temperature is $T_n$, and heated to a temperature T. By using a radiometer 3, the temperature at the measuring point 2 on the inside of the pipe is measured through a transparent window 4 provided in the furnace wall. The temperature E sensed by the radiometer is given by:

$$E = \varepsilon_a \cdot E_b(T) + (1 - \varepsilon_a) \cdot E_b(T_n) \tag{2}$$

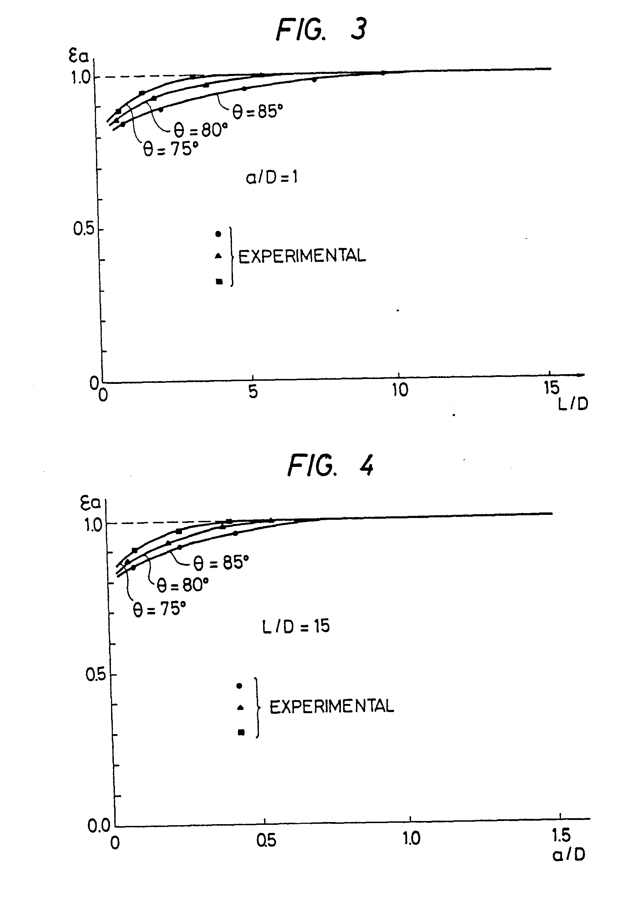

where $\varepsilon_a$ in the first term on the right-hand side is the effective emissivity at the measuring point 2 including the contribution from the whole internal surface of the pipe and the second term represents the noise signal component from the furnace inwall. $\varepsilon_a$ is a function of the quality and such geometrical conditions as $\theta$, L/D and a/D of the pipe shown in Fig. 2. Figs. 3 and 4 exemplify the relationships between $\varepsilon_a$ and such conditions. Here, $\theta$ is the angle formed by a line (radiometer axis or line of sight 3') that connects the measuring point and the radiometer and a normal line N drawn at the measuring point. L is the length between the measuring point and the pipe end opposite to the side on which the radiometer is positioned. D is the pipe diameter, and a is the length between the measuring point and the pipe end closer to the radiometer. The sensing element of the radiometer is a Si-cell having a sensing wavelength of 1 μm. The object measured is a steel pipe.

As is evident from Figs. 3 and 4, $\varepsilon_a$ becomes larger as the value of L/D and a/D increases. By appropriately setting the value of $\theta$, $\varepsilon_a$ becomes approximately equal to 1 ($\varepsilon_a = 1$), which means that pipe temperature can be measured under a condition that resembles a blackbody cavity.

Namely, this invention assures achieving accurate pipe temperature measurement even where the emissivity varies or noise signals exist. With seamless and electric-welded pipes, L/D is approximately equal to 100 or thereabout, so $\varepsilon_a = 1$ is attained even if $\theta$ and a/D are roughly set. In a word, this invention offers a simple but highly effective temperature measuring method.

Even when L/D cannot be made large enough, it is possible to make $\varepsilon_a$ large enough, thereby reducing the noise component $(1 - \varepsilon_a) E_b(T_n)$, by choosing appropriate $\theta$ and a/D. For instance, it is easy to make $\varepsilon_a$ approximately equal to 1 by making a/D>0.5 even when the value of L/D is relatively small as shown in Fig. 4. The measuring condition increasingly approximates to the one in a blackbody cavity as the frequency with which the energy reaching the radiometer is reflected by the internal surface of the pipe.

If the furnace wall temperature $T_n$, pipe temperature T, and allowable temperature measuring error $\Delta T$ are given, the maximum necessary value $\varepsilon_{a,min}$ of $\varepsilon_a$ can be determined from equation (2). Then, $\theta$, a/D and L/D also can be determined by use of Figs. 3 and 4.

In actual measurement, it is possible to make $\varepsilon_a$ approximately equal to 1, and to thereby avoid the disturbing noises from the furnace inwall 7 etc., by so choosing the angle $\theta$ that a line axisymmetrical to the radiometer axis 3' intersects the internal surface of the pipe, the axis of symmetry being the normal line N at the measuring point 2. This requirement can be fulfilled if $D \cdot \tan \theta < L$.

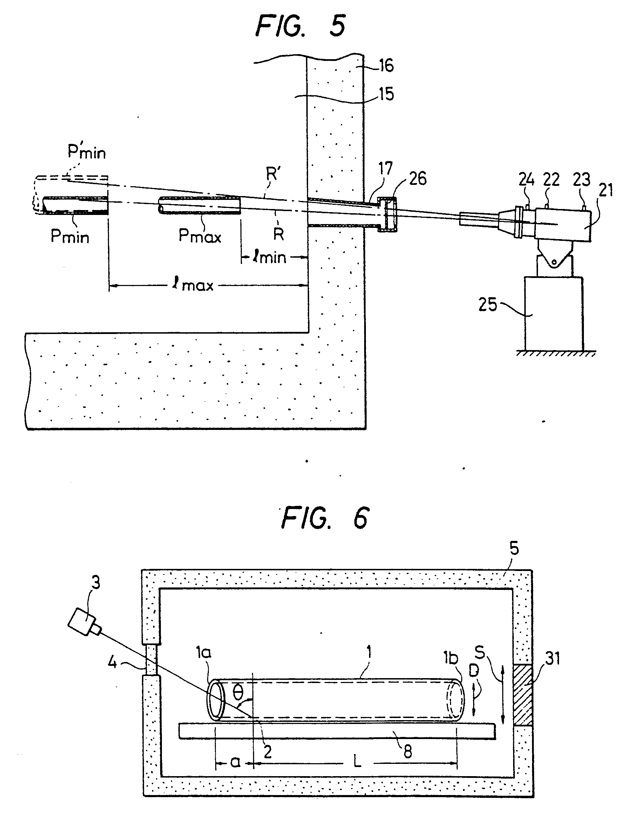

Fig. 5 shows the construction of a temperature measuring device used in a preferred embodiment in which the temperature of a pipe in an actual heat treatment furnace is measured by the method of this invention.

In the figure, reference numeral 15 designates a continuous heat treatment furnace (an annealing or a tempering furnace which is to be referred to simply as the furnace hereinafter), and reference numeral 16 denotes the side wall of the furnace. The figure shows a cross section of the furnace 15 viewed from the exit end thereof. The pipe being treated is laid breadthwise on skids (not shown) and carried at given intervals from the furnace entrance to the furnace exit (in a direction perpendicular to the paper) by a walking-beam type conveyor. The position of the pipe end in the furnace 15 differs with the length of the pipe. For the maximum pipe length (represented by $P_{max}$ in the figure, or 14,000 mm in the embodiment being described), the pipe end lies $l_{min}$ away from the internal surface of the furnace wall 16. For the minimum pipe length (represented by $P_{min}$ in the figure, or 8,000 mm in the embodiment being described), the pipe end lies $l_{max}$ away from the internal surface of the furnace wall 16. In the figure, $P_{max}$ and $P_{min}$ are for the pipe of the smallest outside diameter (88.9 mm) and $P'_{min}$ is for the pipe of the largest outside diameter (193.7 mm) handled in the present embodiment. To measure the temperature on the inside of the pipe in the entry section of the soaking zone and the exit section of the furnace, a peep window 17 is provided in the side wall 16 of the furnace in each section, with a radiometer 21 placed in a position looking into the inside of the pipe from the outside of furnace.

Now the position and the sighting axis (or the inclination) of the radiometer 21 will be discussed. As stated previously, the pipe is carried at given intervals across the length of the furnace 15 by a walking-beam type conveyor, so the pipe temperature can be measured at a certain fixed point along the length of the furnace. When the peep window 17 has been provided in the furnace side wall 16 corresponding to such a measuring point, the position (height) and sighting angle of the radiometer 21 is determined from several geometric relationships as follows. The minimum ($l_{min}$) and the maximum ($l_{max}$) distance between the pipe end and the internal surface of the furnace side wall 16 depends upon the length of the pipe (the shortest and longest length being 8,000 mm and 14,000 mm in the embodiment being discussed). The size (or diameter) of the opening of the pipe end is equal to the inside diameter of the pipe (the smallest and largest inside diameter being 69.3 mm and 166.3 mm in the embodiment being discussed). Accordingly, the sighting axes R and R' directed inward from the end opening of the pipes $P_{max}$, $P_{min}$ and $P'_{min}$ at the respective positions in the furnace can be geometrically determined.

In this embodiment, the radiometer 21 was set so that the center thereof lies somewhat lower than the pipe (or the level of the top surface of the skid now shown) in the furnace, with the sighting axis of the radiometer 21 made capable of vertically variable. Then, the angle of elevation was 3 degrees for the sighting axis R and 5 degrees for the sighting axis R'. This means that the radiometer 21 in this embodiment is capable of measuring the inside temperature of any pipes falling within the aforementioned size range so long as the angle of elevation of the sighting axis thereof can be varied between 3 and 6 degrees (or between 4 and 6 degrees to keep on the safe side).

In Fig. 5, reference numeral 22 designates a port through which water to cool the radiometer 21 is supplied, which is discharged through a port 23. Reference numeral 24 denotes a port through which purging air is supplied to remove the dust on the internal lens etc. Item 25 is a stand on which the radiometer 21 is pivotally supported in a vertically movable manner. Item 26 is a heat-resistant glass panel fitted in the peep window 17.

When $\varepsilon_a$ is approximated to 1, the inside of the pipe safety be regarded as a blackbody ideal for radiometric temperature measurement, with equation (2) now becoming $E=E_b(T)$. To make $\varepsilon_a$ approximately equal to 1, some requirements must be fulfilled such as $a/D=1$, $\theta=85°$ and $L/D>10$, or $a/D=0.6$, $\theta=80°$, and $L/D=15$. Measuring error will arise unless these requirements are filled.

When the values of $\varepsilon_a$ deviates from 1, the second term on the right-hand side of equation (2) becomes unequal to 0. The value of the second term becomes unnegligible especially when the furnace wall temperature is considerably higher than the pipe temperature. Even in such a case, the method of this invention permits achieving accurate temperature measurement with the use of a system arrangement shown in Fig. 6. More specifically, as shown in Fig. 6, a member 31 which has neither reflectivity nor emissivity, that is, which does neither reflect any radiation energy from within the furnace nor emit any radiation energy by itself, such as a water-cooled plate whose surface has been blackened or radiation energy transparent window, is provided on the furnace wall opposite to the pipe end 1b lying away from the other pipe end 1a into which the radiometer 3 is sighted. The object of installing the member 31 is to make substantially equal to 0 the radiation energy that might come from the pipe end 1b and enter the radiometer 3 after being reflected within the pipe. The size, position and other particulars of the member 31 are decided according to the object just defined. Reference numeral 8 designates a device of the walking-beam type or the like that supports and carries the pipe 1. It is preferable that the lower end of the member 31 is positioned below the level of the conveying device 8, with the height S of the member 31 being not smaller than the pipe inside diameter D ($S \geq D$).

This provision eliminates the need of giving thought to the radiation energy coming into the pipe from the end 1b thereof. Elimination of the limiting condition raises the accuracy of measurement, streamlining the right-hand side of equation (2) as follows:

$$E=\varepsilon_a \cdot E_b(T) \qquad (3)$$

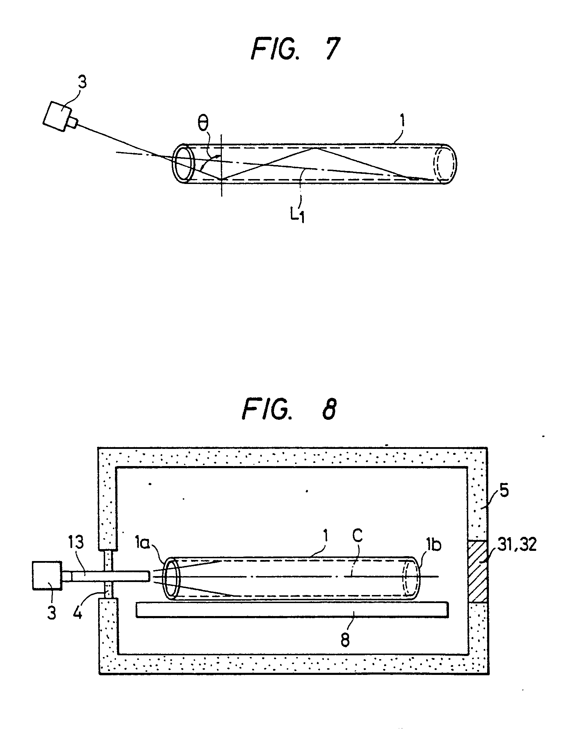

With the angle of incidence θ being no longer limited, it is possible to make θ close to 90 degrees as indicated by the dot-dash line L1 in Fig. 7. This permits choosing the position and angle of the radiometer 3 more freely. The radiometer 3 no longer needs to be installed with any great accuracy so long as it is sighted to the inside of the pipe.

The radiation energy from the pipe may also be introduced to the radiometer 3 by use of an optical fiber (or light pipe) 13 as shown in Fig. 8.

The non-reflective, non-emissive member 31 may be disposed in contact with or some distance away from the pipe end 1b. In the former case, and when the member 31 is a water-cooled plate, the pipe temperature may possibly be affected (lowered). Further, it is dangerous and undesirable to bring any water-cooled object into the high-temperature furnace. Measures to prevent water leakage are easier to take when the water-cooled plate is fitted in the furnace wall. When the member 31 is a radiation energy transparent, window of heat-resistant glass (which is, of course, provided in the furnace wall), for example, there is no need to worry about water leakage. Temperature measurement can be effected at any point of the furnace, and the member 31 need not be very large.

With the radiometer 3 positioned so that the inside of a pipe at a given (measuring) position comes within the visual field thereof, measurement is effected when the pipe in the furnace is conveyed to that position. For example, provision is made to take out the output of the radiometer when the gate of a signal processing circuit opens. The position of the pipe can be detected with the use of an appropriate sensor of the photoelectric, electromagnetic, radiographic or other type. The gate can be opened and closed by using the output of such a sensor. The value sensed by the radiometer 3 is E defined before, from which the pipe temperature T can be determined by using equation (3). The emissivity $\varepsilon_a$ used here may be the one predetermined based on the temperature measurement made for a pipe or pipes of the same kind. Or otherwise, the relationship $\varepsilon_a=1$ may be used if the inside of the pipe can safely be regarded as a blackbody cavity as described previously.

The non-reflective, non-emissive member 31 may also be replaced by a known radiation emitter 32. The amount of radiation energy can be determined from the temperature of the radiation emitter 32 measured and the known emissivity (which is substantially equal to 1 since there is no reflectivity). Then the radiation energy E entering the radiometer 3 and the pipe temperature T can be expressed by equations (4) and (5) as follows:

$$E=\varepsilon_a \cdot E_b(T)+(1-\varepsilon_a) \cdot E_b(T_m) \tag{4}$$

$$E_b(T)=\frac{1}{\varepsilon_a}\{E-(1-\varepsilon_a) \cdot E_b(T_m)\} \tag{5}$$

where $T_m$ is the temperature of the radiation emitter 32, the first term on the right-hand side of equation (4) shows the radiation energy emitted from the temperature measuring point 2 inside the pipe, and the second term thereof shows the radiation energy that is emitted by the radiation emitter 32, reflected at the temperature measuring point 2 inside the pipe 1, and admitted to the radiometer 3. $E_b(T_m)$ can be derived from $T_m$ that is measured by use of a thermocouple or other instrument. $E_b(T_m)$ can be determined also by measuring the radiation emitter by use of the radiometer. Then the value of the second term on the righthand side of equation (4) becomes known. By subtracting the known second term from the energy E received by the radiometer 3, the radiation energy, or the pipe temperature, at the temperature measuring point 2 is determined. The emissivity $\varepsilon_a$ used here may be the one predetermined based on the temperature measurement made for a pipe or pipes of the same kind. Or otherwise, the relationship $\varepsilon_a=1$ may be used if the inside of the pipe can safely be regarded as a blackbody cavity as described previously.

This invention also permits disposing the radiometer 3 so that the center axis of its visual field runs parallel to the center axis C of the pipe 1 or θ becomes substantially equal to 90 degree, as shown in Fig. 8.

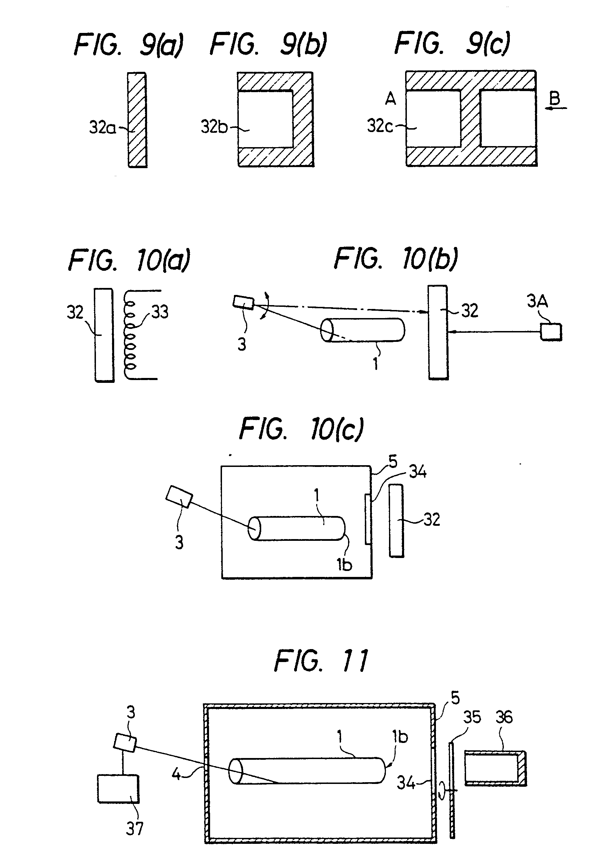

Three sketches (a), (b) and (c) in Fig. 9 show three different types of radiation emitters. Fig. 9(a) shows a plate-like radiation emitter 32a. Fig. 9(b) shows a radiation emitter 32b consisting of a closed-end cylinder resembling a blackbody. Fig. 9(c) shows a radiation emitter 32c which is made up by putting together two radiation emitters 32b, back to back, and adapted to make radiation and measurement from the rear end B. The front side A serves as a shield and radiation emitter like said radiation emitters 32a and 32b. These radiation emitters may be spontaneously heated by the heat of the furnace in the wall of which they are placed, or they may be artificially heated by means of a heater 33 as shown in Fig. 10(a). The artificial heating is suited for keeping the second term on the right-hand side of equation (4) constant by heating the radiation emitter 32 to a constant temperature. In the case of the spontaneous heating, $T_m$ or $E_b(T_m)$ must be measured. $T_m$ can be measured with a thermocouple, or the same object can be achieved by measuring $E_b(T_m)$ with a radiometer. Fig. 10(b) shows how $E_b(T_m)$ is measured. Reference numeral 3A designates a radiometer dedicated to the measurement of $E_b(T_m)$, sighted to the radiation emitter 32 from behind. If the radiometer 3 is tiltable, the need to provide the additional radiometer 3A is eliminated, since the visual field of the radiometer 3 can be shifted to measure the temperature of the radiation emitter 32 as indicated by the dot-dash line. Then the radiometer 3 can be tilted back to the original position to measure the temperature on the inside of the pipe 1. It is also possible to place the radiation emitter 32 outside the furnace as shown in Fig. 10(c), with a radiation energy transparent window 34 provided in the furnace wall opposite to the pipe end 1b.

As shown in Fig. 11, provision may also be made to interrupt the incoming of radiation energy from the end of the pipe which is opposite to the side on which the radiometer is placed at one time and to allow a known radiation energy to come in from the same end at other end. Then, the temperature of the pipe in the furnace can be calculated from the energies the radiometer receives during the cut-off and open periods. A radiation energy transparent window 34 is provided in the furnace wall facing the end 1b of the pipe 1 that is opposite to the side on which the radiometer is placed. Outside this window are provided a rotary sector 35 and a blackbody furnace 36 as illustrated. The blackbody furnace 36 having a temperature $T_m$ emits a radiation energy $E_b(T_m)$. The rotary sector 35 has a transparent and a shielding portion to allow and interrupt the passage of radiation energy, respectively. As the rotary sector 35 rotates, therefore, the inflow of the radiation energy from the blackbody furnace 36 to the end 1b of the pipe 1 becomes intermittent. The radiation energy reaching the pipe end 1b includes some components that have been reflected from various parts of the furnace. But the transparent window 34 and rotary sector 35 function to eliminate such reflected components. That portion of the furnace wall which faces the pipe end 1b is filled with a large enough transparent window 34, as a consequence of which any radiation energy reaching the transparent window passes out therethrough. Although the temperature of the transparent window 34 is the same as that of the furnace wall, the radiation energy emitted thereby is minimal and negligible because the transparent window does not have high emissivity. (If necessary, the transmission window 34 may be cooled). The radiation energy leaving the furnace through the transparent window 34 is absorbed by the blackbody furnace 36 etc. when the transparent portion of the rotary sector 35 faces the window and by the shielding portion thereof when that portion faces. In either case, the radiation energy is not reflected back into the end 1b of the pipe in the furnace.

With this arrangement, the energy received by the radiometer 3 is expressed by equation (6) when the rotary sector 35 cuts off the radiation energy and by equation (7) when the radiation energy from the blackbody furnace is passed.

$$E_1 = \varepsilon_a \cdot E_b(T) \tag{6}$$

$$E_2 = \varepsilon_a \cdot E_b(T) + (1 - \varepsilon_a) \cdot f \cdot E_b(T_m) \tag{7}$$

where f is a geometrical factor which is a constant determined by the emissivity of the pipe 1, the size of the blackbody furnace, and other geometrical conditions.

Equations (8) and (9) are derived from equations (6) and (7).

$$\varepsilon_a = 1 - \frac{E_2 - E_1}{f \cdot E_b(T_m)} \tag{8}$$

$$E_b(T) = \frac{E_1}{\varepsilon_a} \tag{9}$$

The emissivity $\varepsilon_a$ is determined from equation (8), and the pipe temperature T is also determined by inserting the obtained value of $\varepsilon_a$ in equation (9). Reference numeral 37 designates an arithmetic unit that performs these calculations to determine the pipe temperature T.

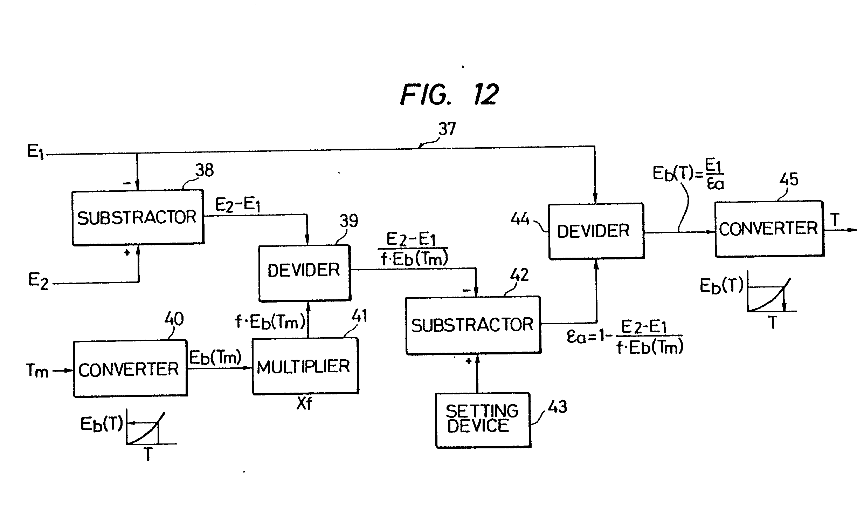

Fig. 12 shows the construction of the arithmetic unit 37 and the flow of arithmetic signals therethrough. Radiation energies $E_1$ and $E_2$ received by the radiometer 3 when the rotary sector 35 cuts off and allows the passage of the radiation energy from the blackbody furnace 36, respectively, are inputted in a subtractor 38 where the difference between the two inputs is computed. An output $(E_2 - E_1)$ from the subtractor 38 is fed to a divider 39.

Meanwhile, a radiation energy corresponding to the temperature $T_m$ of the blackbody furnace 36 is determined by a converter 40 using a characteristic curve $T - E_b(T)$. A signal $E_b(T_m)$ from the converter 40 is inputted, by way of a multiplier 41, into said divider 39 as a signal $f \cdot E_b(T_m)$.

A signal $(E_2 - E_1)/f \cdot E_b(T_m)$ and a signal representing a constant 1 from a setting device 43 are inputted in a subtractor 42 where the emissivity $\varepsilon_a$ is determined. A divider 44 calculates the radiation energy $E_b(T)$ from the pipe using the signal $E_1$ and $\varepsilon_a$. A converter 45 determines the pipe temperature T from a signal $E_b(T)$.

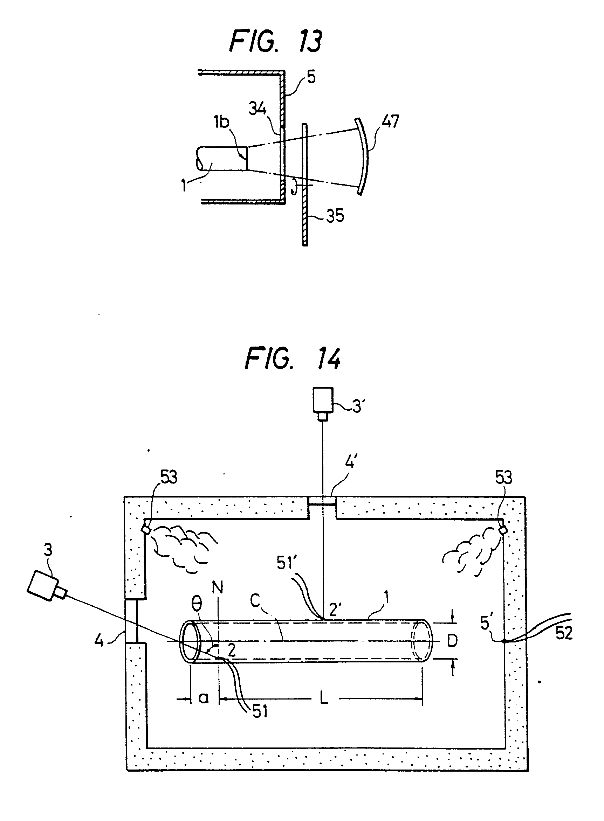

Fig. 13 shows the principal part of an arrangement in which the radiation energy emitted by the pipe 1 is used in place of the blackbody furnace 36 having a temperature $T_m$. Reference numeral 47 designates a concave reflector that reflects the radiation energy from the pipe 1 that has once passed out of the furnace through the transparent window 34 back to the end 1b of the same pipe. The concave reflector has a curved surface which is, figuratively, cut out from a sphere whose radius is substantially equal to the distance between the pipe end 1b and the concave reflector 47. In this case, the following equations hold.

6

$$E_1 = \varepsilon_a \cdot E_b(T) \tag{6}$$

$$E_2 = \varepsilon_a \cdot E_b(T) + (1 - \varepsilon_a) \cdot g \cdot E_b(T) \tag{10}$$

$$\varepsilon_a = \frac{g}{E_2/E_1 - 1 + g} \tag{11}$$

$$E_b(T) = \frac{E_1}{\varepsilon_a} \tag{9}$$

where g is a factor depending on the emissivity of the pipe 1, the reflection factor of the concave reflector 47, etc. which is substantially equal to 1. If necessary, the exact value of g may be measured beforehand.

Two examples of measurements according to the method of this invention are given in the following. In the description of the examples, $T_a$ is the temperature measured by the method of this invention, T is the temperature measured by a thermocouple at the measuring point, $T_n$ is the temperature of the furnace inwall, and $\Delta T$ is the measuring error $T_a - T$, all expressed in °C.

Example 1

Fig. 14 shows an example of the pipe temperature measurement according to the method of this invention. A seamless steel pipe 1 was placed in a heating furnace, where the temperature at a measuring point 2 on the inside of the pipe was measured by use of a radiometer 3. At the same time, the temperature at another measuring point 2' on the outside of the pipe was also measured with a radiometer 3' according to the conventional method. The temperatures at the measuring points 2 and 2' and a point 5' on the furnace inwall on the extension of the center axis C of the pipe 1 were measured by burying thermocouples 51, 51' and 52. The pipe 1 was heated by gas burners 53 provided on the furnace inwalls.

The radiometers 3 and 3' used a Si-cell as their sensing element. The sensor wavelength was 0.65 µm. Measurement by the radiometer 3 was based on the assumption that $\varepsilon_a = 1.0$. The inside diameter D and length L of the pipe 1 were 80 mm and 4,000 mm, respectively. The distance between the measuring point 2 and the pipe end was 80 mm. The angle θ was 75 degrees. Then, $D \cdot \tan \theta = 80 \times \tan 75° = 299$ mm; the requirement that $D \cdot \tan \theta < L$ holds adequately.

Meanwhile, the following equation was used for the measurement according to the conventional method using the radiometer 3'.

$$E_b(T) = \frac{E}{\varepsilon} \tag{12}$$

where E is the value sensed by the radiometer 3' and $\varepsilon$ is the emissivity at the pipe surface. For $\varepsilon$, a predetermined value 0.82 was used ($\varepsilon = 0.82$).

Table 1 shows the results of the measurements.

TABLE 1

| No. of measure-ments | Temperature of furnace inwall 5' $T_n(°C)$ | Radiometer temperature reading— this invention $T_a(°C)$ | Temperature at measuring point 2 $T(°C)$ | Measuring error— this invention $\Delta T = T_a - T(°C)$ | Radiometer temperature reading— conventional $T_a'(°C)$ | Temperature at measuring point 2' $T'(°C)$ | Measuring error— conventional $\Delta T' = T_a' - T'(°C)$ |
|---|---|---|---|---|---|---|---|
| 1 | 905 | 807 | 802 | 5 | 870~952 | 811 | 59~141 |
| 2 | 1100 | 910 | 904 | 6· | 972~1074 | 909 | 63~165 |
| 3 | 1250 | 1008 | 1000 | 8 | 1093~1297 | 1015 | 78~282 |
| 4 | 1340 | 1112 | 1102 | 10 | 1210~1405 | 1118 | 92~287 |

0 083 100

As is evident from Table 1, the conventional method produced a very large and widely varying measuring error $\Delta T' = T_a' - T'$. This is due to the extensive influence of the disturbing noises developed by the furnace walls and the gas burner flames. The error becomes still larger if the combustion rate of the gas burner is raised.

Example 2

Tables 2 through 4 show the results of the measurements achieved using the arrangement shown in Fig. 6. Table 2 shows the results obtained when the non-reflective, non-emissive member 31 was not water-cooled. Table 3 shows the results obtained when the same member 31 was water-cooled. Table 4 shows the results obtained when a transparent window of quartz glass was used in place of the water-cooled plate. The radiometer used in this example was the same as those in Example 1. Other conditions were: $\theta = 80$ degrees, $a = 100$ mm, $L = 1,500$ mm, $D = 100$ mm, and the diameter of the water-cooled plate and the transparent window was 150 mm.

TABLE 2
(with plate not water-cooled)
(1) Stainless steel pipe

| $T_a$ | $T$ | $T_n$ | $\Delta T$ |
|---|---|---|---|
| 825 | 810 | 922 | 15 |
| 1045 | 1025 | 1265 | 20 |

(2) Carbon steel pipe

| $T_a$ | $T$ | $T_n$ | $\Delta T$ |
|---|---|---|---|
| 815 | 807 | 930 | 8 |
| 1018 | 1010 | 1262 | 8 |

TABLE 3
(with plate water-cooled)
(1) Stainless steel pipe

| $T_a$ | $T$ | $T_n$ | $\Delta T$ |
|---|---|---|---|
| 825 | 827 | 40 | −2 |
| 1045 | 1054 | 40 | −9 |

(2) Carbon steel pipe

| $T_a$ | $T$ | $T_n$ | $\Delta T$ |
|---|---|---|---|
| 823 | 824 | 40 | −1 |
| 1027 | 1030 | 40 | −3 |

TABLE 4
(with transparent window)
(1) Stainless steel pipe

| $T_a$ | $T$ | $T_n$ | $\Delta T$ |
|---|---|---|---|
| 821 | 823 | — | −2 |
| 1035 | 1038 | — | −3 |

(2) Carbon steel pipe

| $T_a$ | $T$ | $T_n$ | $\Delta T$ |
|---|---|---|---|
| 814 | 815 | — | −1 |
| 1040 | 1039 | — | 1 |

9

**0 083 100**

As is evident from the above results, the use of the water-cooled plate or the transparent window considerably reduces the measuring error ΔT.

As will be understood from the above description, the method of this invention always assures accurate temperature measurement within the tolerances of measuring errors even in the presence of various disturbances in the surroundings.

Evidently, this invention is applicable to the temperature measurement of not only seamless steel pipes but also to tubular products of all shapes and materials (such as aluminum and ceramics). The method of this invention is particularly effective when the object of measurement is in a furnace, and more so when the object is in motion. The temperature of the object outside a furnace or at a standstill can be measured with greater ease.

The furnace is also not limited to the closed type equipped with a burner, electric-resistance heater, etc. For example, an induction heating furnace can serve the purpose, as well.

**Claims**

1. A method of measuring the temperature of a pipe (1) placed in a heat treatment furnace which comprises directing a radiometer (3) disposed outside the pipe (1) in such a direction to a measuring point (2) on the inner surface of the pipe (1) through one end (1a) thereof that the radiometer axis (3') connecting the radiometer (3) and the measuring point (2) is axisymmetrical, with respect to the normal line (N) drawn at the measuring point (2), to a line intersecting the inner surface of the pipe (1) at another point, and sensing the radiation energy emitted from the inner surface of the pipe (1) by use of the radiometer (3).

2. The method according to claim 1, in which a non-reflective, non-emissive member (31) is placed in the furnace wall (7) facing an end (1b) of the pipe (1) that is opposite to the side (1a) on which the radiometer (3) is placed, thereby allowing the radiometer (3) to receive only the radiation energy emitted from the inner surface of the pipe (1) by substantially cutting off the radiation energy that might reach the radiometer (3) through said pipe end (1b).

3. The method according to claim 1, in which an emitting source (32) sending forth a radiation energy of known magnitude is placed in the furnace wall (7) facing an end (1b) of the pipe (1) that is opposite to the side (1a) on which the radiometer (3) is placed, thereby allowing the radiometer (3) to receive not only the radiation energy emitted from the inner surface of the pipe (1) but also the known radiation energy that might reach the radiometer (3) through said pipe end (1b).

4. The method according to claim 1, in which a radiation energy transparent window (34) is placed in the furnace wall (7) facing an end (1b) of the pipe (1) that is opposite to the side (1a) on which the radiometer (3) is placed, and an emitting source (32; 36) sending forth a radiation energy of known magnitude is placed outside the furnace, thereby allowing the radiometer (3) to receive not only the radiation energy emitted from the inner surface of the pipe (1) but also the known radiation energy that might reach the radiometer (3) through said pipe end (1b).

5. The method according to claim 3 or 4, wherein the known emitting source (32; 36) is a blackbody having a constant temperature.

6. The method according to claims 1 to 5, in which the admission of a given amount of radiation energy from the end (16) of the pipe (1) that is opposite to the radiometer-side of the pipe (1) is intermittently allowed and cut off, and the pipe temperature is computed from the radiation energies received by the radiometer (3) while the admission of said radiation energy is allowed and cut off.

7. The method according to claims 1 and 6, in which the radiation energy emitted by the pipe (1) is reflected by a concave reflector (47) and passed again through the pipe (1).

8. The method according to claims 1 to 7, in which the angle formed between the normal line (N) drawn at the measuring point (2) and the direction of the radiometer axis (3') is substantially 90°.

**Patentansprüche**

1. Verfahren zum Messen der Temperatur eines in einem Wärmebehandlungsofen angeordneten Rohres (1), welches folgende Verfahrensschritte aufweist: Richten eines außerhalb des Rohres (1) angeordneten Radiometers (3) in einer derartigen Richtung auf einen Meßpunkt (2) auf der inneren Oberfläche des Rohres (1) durch eines von dessen Enden (1a), daß die das Radiometer (3) und den Meßpunkt (2) verbindende Radiometerachse (3') bezüglich der an dem Meßpunkt (2) gezogenen Normalen (N) axialsymmetrisch mit einer Linie ist, die die innere Oberfläche des Rohres (1) an einem anderen Punkt schneidet, und Ermitteln der von der inneren Oberfläche des Rohres (1) emittierten Strahlungsenergie mittels des Radiometers (3).

2. Verfahren nach Anspruch 1, bei dem ein nicht reflektierendes und nicht emittierendes Bauteil (31) in der Ofenwand (7) angeordnet ist, die einem Ende (1b) des Rohres (1) gegenüberliegt, das derjenigen Seite (1a) entgegengesetzt ist, auf der das Radiometer (3) angeordnet ist, wodurch das Radiometer (3) nur die von der inneren Oberfläche des Rohres (1) emittierte Strahlungsenergie empfangen kann und diejenige Strahlungsenergie im wesentlichen abgeschnitten wird, die das Radiometer (3) durch das Ende (1b) des Rohres erreichen könnte.

10

3. Verfahren nach Anspruch 1, wobei eine Strahlungsenergie mit bekannter Größe aussendende Emissionsquelle (32) in der Ofenwand (7) angeordnet ist, die einem Ende (1b) des Rohrs (1) gegenüberliegt, das derjenigen Seite (1a) entgegengesetzt ist, auf der das Radiometer (3) angeordnet ist, wodurch das Radiometer (3) nicht nur die von der inneren Oberfläche des Rohres (1) emittierte Strahlungsenergie, sondern auch die bekannte Strahlungsenergie empfangen kann, die das Radiometer (3) durch das Ende (1b) des Rohres erreichen könnte.

4. Verfahren nach Anspruch 1, bei dem ein für Strahlungsenergie transparentes Fenster (34) in der Ofenwand (17) angeordnet ist, die einem Ende (1b) des Rohrs (1) gegenüberliegt, das der Seite (1a) entgegengesetzt ist, auf der das Radiometer (3) angeordnet ist, und bei dem eine Strahlungsenergie mit bekannter Größe aussendende Emissionsquelle (32; 36) außerhalb des Ofens angeordnet ist, wodurch das Radiometer (3) nicht nur die von der inneren Oberfläche des Rohres (1) emittierte Strahlungsenergie, sondern auch die bekannte Strahlungsenergie empfangen kann, die das Radiometer (3) durch das Ende (1b) des Rohres erreichen könnte.

5. Verfahren nach Anspruch 3 oder 4, wobei die bekannte Emissionsquelle (32; 36) ein schwarzer Körper mit konstanter Temperatur ist.

6. Verfahren nach den Ansprüchen 1 bis 5, bei dem der Einlaß einer gegebenen Menge an Strahlungsenergie von dem der Radiometerseite des Rohrs (1) entgegengesetzten Ende (1b) des Rohrs (1) abwechselnd zugelassen und abgeschnitten wird und die Rohrtemperatur aus den Strahlungsenergien berechnet wird, die von dem Radiometer (3) empfangen werden, während der Einlaß der Strahlungsenergie zugelassen und abgeschnitten ist.

7. Verfahren nach den Ansprüchen 1 bis 6, bei dem die von dem Rohr (1) emittierte Strahlungsenergie von einem konkaven Reflektor (47) reflektiert und erneut durch das Rohr (1) geführt wird.

8. Verfahren nach den Ansprüchen 1 bis 7, bei dem der zwischen der an dem Meßpunkt (2) gezogenen Normalen (N) und der Richtung der Radiometerachse (3') gebildete Winkel im wesentlichen 90° ist.

## Revendications

1. Procédé pour mesurer la température d'un tuyau (1) placé dans un four de traitement thermique, qui consiste à orienter un radiomètre (3), disposé à l'extérieur du tuyau (1), dans une direction telle, vers un point de mesure (2) sur la surface interne du tuyau (1), à travers l'une (1a) des extrémités de ce dernier, que l'axe (3') du radiomètre reliant le radiomètre (3) et le point de mesure (2) soit axisymétrique, par rapport à la ligne normale (N) établie au point de mesure (2), d'une ligne coupant la surface interne du tuyau (1) en un autre point, et à détecter l'énergie de rayonnement émise par la surface interne du tuyau (1) à l'aide du radiomètre (3).

2. Procédé selon la revendication 1, dans lequel un élément (31) non réfléchissant, non émetteur, est placé dans la paroi (7) du four faisant face à l'extrémité (1b) du tuyau (1) qui est opposée au côté (1a) sur lequel la radiomètre (3) est placé, permettant ainsi au radiomètre (3) de ne recevoir que l'énergie de rayonnement émise par la surface interne du tuyau (1), en coupant sensiblement l'énergie du rayonnement qui pourrait atteindre le radiomètre (3) par ladite extrémité (1b) du tuyau.

3. Procédé selon la revendication 1, dans lequel une source d'émission (32) émettant une énergie de rayonnement d'amplitude connue est placée dans la paroi (7) du four faisant face à l'extrémité (1b) du tuyau (1) qui est opposée au côté (1a) sur lequel le radiomètre (3) est placé, permettant ainsi au radiomètre (3) de recevoir non seulement l'énergie de rayonnement émise par la surface interne du tuyau (1), mais encore l'énergie de rayonnement connue qui pourrait atteindre le radiomètre (3) par ladite extrémité (1b) du tuyau.

4. Procédé selon la revendication 1, dans lequel une fenêtre (34) transparente à l'énergie de rayonnement est placée dans la paroi (7) du four faisant face à l'extrémité (1b) du tuyau (1) qui est opposée au côté (1a) sur lequel le radiomètre (3) est placé, et une source émettrice (32; 36) émettant une énergie de rayonnement d'amplitude connue est placée à l'extérieur du four, permettant ainsi au radiomètre (3) de recevoir non seulement l'énergie de rayonnement émise par la surface interne du tuyau (1), mais encore l'énergie de rayonnement connue qui pourrait atteindre le radiomètre (3) par ladite extrémité (1b) du tuyau.

5. Procédé selon la revendication 3 ou 4, dans lequel la source émettrice connue (32; 36) est un corps noir présentant une température constante.

6. Procédé selon les revendications 1 à 5, dans lequel l'admission d'une quantité donnée d'énergie de rayonnement par l'extrémité (1b) du tuyau (1) qui est opposée au côté du tuyau (1) tourné vers le radiomètre, est autorisée et coupée par intermittence, et la température du tuyau est évaluée à partir des énergies de rayonnement reçues par le radiomètre (3) alors que l'admission de ladite énergie de rayonnement est autorisée et coupée.

7. Procédé selon les revendications 1 et 6, dans lequel l'énergie de rayonnement émise par le tuyau (1) est réfléchie par un réflecteur concave (47) et traverse à nouveau le tuyau (1).

8. Procédé selon les revendications 1 à 7, dans lequel l'angle formé entre la ligne normale (N) établie au point de mesure (2) et la direction de l'axe (3') du radiomètre est pratiquement de 90°.

# FIG. 1

# FIG. 2

# FIG. 3

# FIG. 4

## FIG. 5

## FIG. 6

FIG. 7

FIG. 8

FIG. 9(a)  FIG. 9(b)  FIG. 9(c)

FIG. 10(a)  FIG. 10(b)

FIG. 10(c)

FIG. 11

*FIG. 12*

## FIG. 13

## FIG. 14